## Europäisches Patentamt
## European Patent Office
## Office européen des brevets

(19)

(11) Publication number: **0 033 413**
**B1**

(12)

# EUROPEAN PATENT SPECIFICATION

(45) Date of publication of patent specification: **28.03.84**

(51) Int. Cl.³: **B 01 D 3/28**

(21) Application number: **80304078.1**

(22) Date of filing: **13.11.80**

(54) Vapour-liquid contact apparatus and method of fabricating grid-elements for use in such apparatus.

(30) Priority: **19.11.79 US 95296**

(43) Date of publication of application:
**12.08.81 Bulletin 81/32**

(45) Publication of the grant of the patent:
**28.03.84 Bulletin 84/13**

(84) Designated Contracting States:
**DE FR GB IT**

(56) References cited:
**DE - A - 2 818 557**
**DE - B - 2 516 078**
**DE - U - 1 751 648**
**GB - A - 1 339 879**

**Patents Abstracts of Japan Vol. 2, No. 93, 29**
**July 1978 page 1642C78**
**CHEMISCHE TECHNIK, Vol. 26, No. 6, June**
**1974 Berlin K. HOPPE et al. "Untersuchungen zur**
**Hydrodynamik und zum Stoffübergang beim**
**Perform-Grid" pages 340 to 344**

(73) Proprietor: **KOCH ENGINEERING COMPANY INC**
**4111 East 37th Street North**
**Wichita Kansas 67208 (US)**

(72) Inventor: **Chen, Gilbert K.**
**8303 Street**
**Wichita, KA. (US)**
Inventor: **Nyberg, Paul M.**
**5102 Kings Row**
**Wichita, KA. (US)**
Inventor: **Buchholz, Matthew**
**250 North Bluff**
**Wichita, KA. (US)**

(74) Representative: **Williams, Trevor John et al,**
**J.A. KEMP & CO. 14 South Square Gray's Inn**
**London WC1R 5EU (GB)**

Courier Press, Leamington Spa, England.

Vapour-liquid contact apparatus and method of fabricating grid-elements for use in such apparatus

Contact grids are used in many applications where it is necessary to provide efficient exchange between a liquid and a gaseous fluid. One common use is the incorporation of such grids in layers as packing for scrubbing, cooling or distillation towers. In all of these systems, the basic design criteria are the same; the surfaces of the grid should retard the descent of the liquid, create vapour turbulence, and provide additional surface area for gas-liquid contact. At the same time contact grid designs must avoid large pressure drops across the packing and prevent adverse back pressure effects upstream.

Certain prior contact grids are described in United States Patent Specification No. 3,343,821. Patent No. 3,343,821 which discloses elongated grid members having formations which jut out from the members and, thus, restrict vapour passage therebetween.

One disadvantage of some prior art contact grids has been the complexity and cost associated with the manufacture of the grid elements and contact grids as well as the difficulties encountered in fabricating such contact grids. The above mentioned United States Patent Specification No. 3,343,821 discloses grid members having integral diagonal crossbars formed by the cutting and bending of the grid members, and describes how such crossbars may be welded together to form a grid. When grids are so constructed, care must be taken to ensure that the grid members are properly cut and bent, and that the welds are clean. Furthermore, it should be apparent that the joints formed by this method have less than optimal mechanical strength insofar as they are free-standing welds.

Such prior contact grids have also suffered from a deficiency of drip points or other means to generate small drops of liquid. While contact grids are known to create vapour turbulence and provide additional contact area on their surfaces, the prior art structures have not all been designed to maximise the number of small drops of liquid, whereby gas-liquid exchange can occur all along the nearly spherical surfaces of the drops.

Therefore, there exists a need for a more efficient, simplified gas-liquid contact grid, which is inexpensive to manufacture and easy to construct. Additionally, there is a need to improve the mechanical strength of grid structures without reliance on expensive high grade materials.

It has been discovered that a strong, efficient, economical gas-liquid contact grid for use in tower packings can be made from relatively light weight materials when the elongated contact strips or grid members are joined by connector members in "egg-carton"-like fashion.

German specification No. 2516078 discloses a vapour-liquid contact grid comprising a plurality of grid members disposed in substantially parallel spaced-apart relationship and secured to a plurality of connectors comprised of thin, upright strip elements positioned in a generally vertical, spaced-apart and parallel relationship with each other and cross-wise relative to the grid members, each of the grid members being flat with projections therefrom provided by integral tabs derived from the grid member and projecting outwardly from the plane thereof. The tab members of this reference are provided to maintain a wetted area when pressed from the material of the grid members to provide pressure balancing apertures through the grid members. The tabs do not in themselves influence positively the effect of the flow of fluid through the grid members and are provided as a series of substantially vertically arranged small tabs which are not orientated positively to direct fluid through the grid members. The present invention provides for the provision of tabs in the form of vanes so arranged as to occupy a substantial and major portion of the length of the grid member with the vanes being so arranged as to be directed into the fluid flow past the grid members positively to direct a proportion of that flow through an aperture in the grid member. This provides for extremely efficient intermingling and mixing contact of the fluids to be contacted in the apparatus with a minimum restriction to the flow of liquids leading to pressure drop through the grid. For this purpose also the grid members of the present invention are arranged parallel with the direction of flow through the grid so as to minimize pressure drop in the apparatus.

The present invention is characterized in that tabs are in the form of vanes elongated longitudinally of the grid member and paired in sections so that the vanes of each pair are positioned one above the other along the longitudinal length of the grid member with the vanes of each pair extending from opposite sides of the grid member, the vanes in each grid member having been provided by forming tabs defined by a longitudinal cut in the grid member which intersects and extends between two transverse cuts spaced longitudinally of the grid member, the vanes of adjacent sections being separated by a respective rib element formed in the grid member with the vanes each extending a significantly greater longitudinal proportion of the length of the grid member than the rib elements therebetween, the grid members being secured upright in substantially vertical planes by engagement of the connectors with the rib elements. The vanes permit efficient exchange of heat or particulates, or chemical reactions, between liquids and vapours. While most applications of contact grids are in tower packings where exchange takes place between a descending liquid and an ascending vapour, the grids disclosed herein may be used in concurrent flow, perpendicular cross-flow and chemical mixing situations as well.

According to another aspect of the invention there is provided a method of fabricating a vapour-liquid grid for use in a vapour-liquid contact apparatus from thin, narrow, strip material, said method comprises making a plurality of longitudinal cuts in a plurality of lengths of said strip material, with supporting noncut rib sections being left therebetween and bending the tabs out from the plane of each length between the cuts, and securing thin upright strip elements in supporting relation transversely of a plurality of parallel spaced lengths of the strip material, characterized in that the longitudinal cuts are relatively long and with the supporting rib sections being relatively short, transverse cuts are made at each end of the longitudinal cuts, to form a plurality of cut sections in the strip material, the lengths of strip material, along each side of the cut section generally parallel to the longitudinal cut and to each end of the transverse cuts in each cut section, being bent outwardly on either side of the strip material, to form a pair of outward vane elements extending from each cut section to opposite sides of the strip material.

Preferably a plurality of generally long, longitudinal and short, transverse cuts at each end are made in general shape of an "I" centrally in the strip material, with short, supporting, noncut rib sections therebetween with the cutting and bending being done in one step by a die press with curved surfaces, producing vanes which curve out from the member in opposite directions. It is also preferred that the pattern reverse itself from one "I" cut to the next. Thus, if the upper vane of one cut curves to the left and the lower vane to the right, in the succeeding cut the upper vane should curve to the right and the lower vane to the left.

In another preferred aspect of the invention the longitudinal slit of the "I" cut is serrated or forms a ragged edge. The vanes thus formed from the tabs will have a plurality of drip points. By forming vanes with drip points, the grids disclosed herein serve to maximize the number of small drops of liquid generated and thus provide a greater gas-liquid exchange rate because of the increased surface area of the nearly spherical droplets.

Any number of such alternating vane configurations can be made in a single pressing by proper arrangement of the die press' curved blades. Preferably the same operation which cuts and bends the vane should also cut slots into ribs between vane regions so as to form the alternating top and bottom receiving slots for the connecting members which provide the cross-linkage of the multi-layer grid.

This invention will be described for the purpose of illustration only with reference to the accompanying drawings in connection with certain preferred embodiments, although it is recognised that various modifications may be made without departing from the scope of the invention. For example, more than one row of paired vanes can be formed in each grid member. Multiple pairs of vanes may be formed in parallel.

In the drawings:

Figures 1a—1c are plan views of alternative strip embodiments of the strip material used in fabricating a grid according to the invention;

Figure 2 is a perspective view from above of part of the basic grid structure;

Figure 3 is an illustrative, partial end view of a multi-layer contact grid formed according to the invention.

Figure 4 is an illustrative partial perspective view of the multi-layer contact grid.

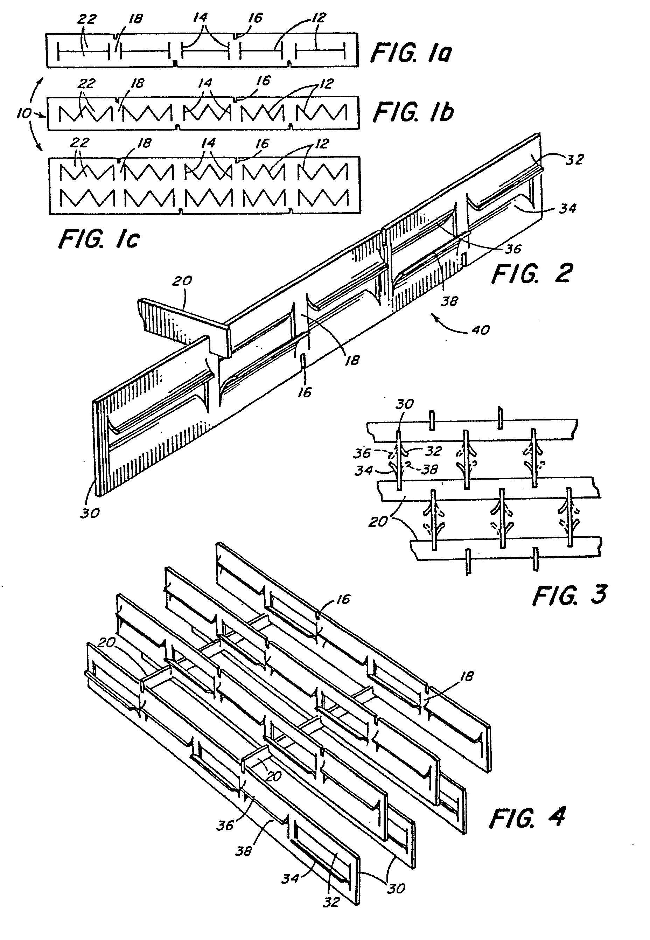

In Figures 1a—1c pieces of strip material 10 which have been cut, but not yet shaped, are shown. In Figure 1a a basic "I" cut is shown. In Figure 1b the longitudinal slits 12 are serrated and in Figure 1c two parallel sets of serrated "I" cuts are shown. Strips such as the ones shown are cut to various lengths depending on the cross-sectional area of the tower in which the grid is ultimately employed. In each of these alternatives, longitudinal, medial, cuts 12 have been made into the strip material as well as shorter, transverse cuts 14 which intersect with the ends of each longitudinal cut 12. Together the longitudinal cut 12 and the intersecting transverse cuts in the embodiment of Figure 1a form a complete "I" shaped cut, leaving two tabs 22, each tab having three sides which have been freed from the strip material to facilitate the forming of vanes by bending. In the embodiments/Figures 1b and 1c the longitudinal cuts 12 have a zig-zag or serrated configuration to define a plurality of triangular tabs 22 to be bent out of the plane of the strip. Alternatively the tabs 22 as shown in Figure 1a may be provided with a serrated edge or perforations to provide drip points. In addition, the ribs 18 of the strip material 10 between the longitudinally spaced ends of adjacent longitudinal cuts 12 in Figures 1a to c have been cut to form alternating top and bottom rib slots 16.

Figure 2 shows the basic grid structure 40 which consists of a grid member 30 and a connector 20; in use the connector 20 links the grid member 30 to its neighbours. The grid member 30 has been formed from the strip material 10 shown in Figure 1a. A plurality of curved vanes 32, 34, 36 and 38 have been formed by bending the tabs 22 described above. The pattern of opposing vanes is apparent from the figure. Vane 32, an upper vane, curves to the left while the lower vane 34, formed from the common "I" cut, curves to the right. In the adjacent set of vanes, upper vane 36 curves to the right while lower vane 38 curves to the left. In this embodiment the alternating pattern illustrated by vanes 32, 34, 36 and 38 is repeated throughout each of the grid members.

The linkage between the grid members 30 and connectors 20 is also illustrated in Figure 2. The thickness of the connectors is such that they may be fit into the slots 16 carried by the ribs 18 of the grid member 30. The connector 20 shown in Figure 2 has been fitted into one of the slots 16 and serves to connect the grid member 30 not only with its horizontal neighbours but also with its neighbours in the grid layer above. Similarly, a connector (not shown) fits into the slot 16 in the under edge of the grid member 30 and serves to reinforce the connection of the grid member 30 with its horizontal neighbours as well as provide linkage with the neighbouring grid members in the layer below.

In Figure 3, the cross-linkage between the grid layers is more clearly shown, each connector 20 serving to link two layers of horizontal grids 30. The advantages of this "egg carton"-like grid arrangement are that a rigid structure is easily formed and that the structure is designed to maximize the pressure bearing capability of the materials. Since pressure loads in a tower packing are exhibited primarily in the vertical direction, the egg carton arrangement is particularly suited for multi-layer grids. This arrangement permits the strongest components of the apparatus, when the apparatus is loaded from above, the ribs 18 of grid elements 30 and the connectors 20, to carry the vertical load.

Figure 3 also illustrates the basic function of the vanes, when the grids are used in vertical tower packings. First, the vanes both impede the descent of any liquids sprayed down the towers and create turbulence in the ascending vapours. Secondly, as the surfaces of the vanes become wet they provide areas for gas-liquid contact and exchange. Thirdly, the edges of the vanes, particularly when the edges are serrated as shown in Figure 1b or Figure 1c, form a plurality of drip points whereby the number of small drops of liquid in the tower is maximized. Finally in the upper regions of the packing, the vanes permit liquid disentrainment from fully moisture-laden vapours, the liquid trickling down the grid for further contact and re-use.

Figure 4 is a partial perspective view of two layers of a typical contact grid apparatus constructed in accordance with the invention. The cross linking of the grid members 30 of the two layers is shown as well as the alternating pattern of vanes 32, 34, 36 and 38.

In practice the grid members 30 may be cut and formed in a single operation from a continuous strip of material. The fully formed strip may then be cut to size. Likewise, the connectors may be cut to size from a continuous strip of material. The grid members and connectors are then assembled in an "egg carton"-like fashion into a multi-layer grid. The grid apparatus is then installed into a tower or other suitable chamber for gas-liquid exchanges.

It should be obvious that various changes can be made to the grid apparatus and components described herein. For example, the vanes shown herein are curved but various other protrusions from the grid member, forming a perpendicular or oblique angle therewith, would also suffice. Perforation of the strip material before slitting can also be practiced as an alternative to forming serrations or in order to create yet additional drip points. Additionally, the number of connectors used can be more or less than the number shown; each rib of a grid member has the capacity to carry a top and a bottom slot. The dimensions of the members and connectors as well as the spacing there between is all relative to the application.

**Claims**

1. A vapour-liquid contact grid comprising a plurality of grid members (30) disposed in substantially parallel spaced-apart relationship and secured to a plurality of connectors comprised of thin, upright strip elements (20) positioned in a generally vertical, spaced-apart and parallel relationship with each other and cross-wise relative to the grid members, each of the grid members being flat with projections therefrom provided by integral tabs (32, 34, 36, 38) derived from the grid member and projecting outwardly from the plane thereof, characterized in that the tabs are in the form of vanes (32, 34, 46, 48) elongated longitudinally of the grid member (30) and paired in sections so that the vanes (32, 34 and 36, 38) of each pair are positioned one above the other along the longitudinal length of the grid member with the vanes of each pair extending from opposite sides of the grid member, the vanes in each grid member (30) having been provided by forming tabs (22) defined by a longitudinal cut (12) in the grid member (30) which intersects and extends between two transverse cuts (14) spaced longitudinally of the grid member (30), the vanes of adjacent sections being separated by a respective rib element (18) formed in the grid member with the vanes each extending a significantly greater longitudinal proportion of the length of the grid member than the rib elements therebetween, the grid members (30) being secured upright in substantially vertical planes by engagement of the connectors (20) with the rib elements (18).

2. A grid as claimed in claim 1, characterised in that the connectors (20) extend substantially perpendicularly to the upright grid members (30).

3. A grid as claimed in claim 1 or 2, characterised in that the connectors (20) are secured in an alternating fashion at the upper and lower edges of the grid member (30).

4. A grid as claimed in claim 1, 2 or 3, characterised in that the vanes (32, 34, 36, 38) extend in a curved fashion, with one (34) of the vanes curved downwardly in one section and the other (32) of the vanes curved upwardly in the same section, the vanes (32, 34 and 36, 38) of each section alternating in the direction of projection along the longitudinal length of the grid members.

5. A grid as claimed in any preceding claim, characterised in that the vanes have serrated edges so as to form a plurality of drip points.

6. A grid as claimed in claim 1, 2, 3 or 4, characterised in that the vanes have perforations so as to form a plurality of drip points.

7. A grid as claimed in claim 5, characterised in that the longitudinal cuts (12) are zigzag and connect with end portions of the transverse cuts (14).

8. A grid as claimed in any preceding claim, characterised in that the grid members (30) carry a plurality of pairs of vanes positioned one pair above the other.

9. A grid as claimed in any preceding claim, characterised in that the vertical height of the connectors (20) is substantially less than the vertical height of the upright grid members (30).

10. A vapour liquid contact apparatus comprising a plurality of grids as claimed in any preceding claim the grids being arranged one above the other with connections (20) at the top edges of grid members (30) of one layer comprising the connectors (20) at the bottom edges of the grid members (30) of the layer immediately above the one layer.

11. A method of fabricating a vapour-liquid grid for use in a vapour-liquid contact apparatus from thin, narrow, strip material, said method comprising making a plurality of longitudinal cuts (12) in a plurality of lengths (30) of said strip material, with supporting, noncut rib sections (18) being left therebetween, and bending the tabs (32, 34) out from the plane of each length between the cuts, and securing thin upright strip elements (20) in supporting relation transversely of a plurality of parallel spaced lengths (30) of the strip material, characterized in that the longitudinal cuts (12) are relatively long with the supporting rib sections (18) being relatively short, transverse cuts (14) are made at each end of the longitudinal cuts (12), to form a plurality of cut sections in the strip material, the lengths (30) of strip material, along each side of the cut section generally parallel to the longitudinal cut and to each end of the transverse cuts in each cut section, being bent outwardly on either side of the strip material, to form a pair of outward vane elements (32, 34) extending from each cut section to opposite sides of the strip material.

12. A method as claimed in claim 11, characterised in that a plurality of "I"-shaped cuts are made in the strip material (30) to form "I"-shaped cut sections.

13. A method as claimed in claim 11 or 12, characterised in that the longitudinal cuts are serrated.

14. A method as claimed in claim 11, 12 or 13, characterised in that spaced pairs of the longitudinal cuts are provided side-by-side in the strip material in each cut section.

15. A method as claimed in any one of claims 11 to 14, characterised in that the transverse cuts (14) at each end of the cut sections are substantially perpendicular to the longitudinal cuts (12).

16. A method as claimed in any one of claims 11 to 15, characterised in that the strip material is bent to form outwardly extending curved vane elements.

17. A method as claimed in any one of claims 11 to 16, characterised in that the outwardly extending vane elements in adjacent cut sections extend to opposite sides of the strip material with the direction of projection of the vane elements alternating along the length of the strip material.

18. A method as claimed in any one of claims 11 to 17, characterised in that the strip material is cut and bent in a single-step operation, employing a die press, to form the vane elements with curved, outwardly extending surfaces.

**Patentansprüche**

1. Dampf-Flüssigkeits-Kontaktgitter mit einer Anzahl von Gitterelementen (30), die in im wesentlichen parallel beabstandeter Beziehung angeordnet und an einer Anzahl von Verbindern mit dünnen, aufrechtstehenden Streifenelementen befestigt sind, die in im allgemeinen vertikaler, beabstandeter und paralleler Beziehung zueinander stehen und gegenüber den Gitterelementen quer angeordnet sind, wobei jedes der Gitterelemente eben ist und Vorsprünge aufweist, die von einstückigen Fortsätzen (32, 34, 36, 38) gebildet sind, welche Teil der Gitterelemente sind und von deren Ebene nach außen vorstehen, dadurch gekennzeichnet, daß die Fortsätze die Form von in Längsrichtung der Gitterelemente (30) länglichen Flügeln (32, 34, 36, 38) haben und in Abschnitten paarweise derart angeordnet sind, daß die Flügel (32, 34 und 36, 38) jedes Paares jeweils übereinander entlang der Längserstreckung der Gitterelemente angeordnet sind, wobei die Flügel jedes Paares sich von entgegengesetzten Seiten des Gitterelements erstrecken, daß die Flügel jedes Gitterelements (30) durch Formstreifen (22) geschaffen sind, die durch einen Einschnitt (12) in Längsrichtung im Gitterelement (30) gebildet sind, welche sich zwischen zwei in Querrichtung verlaufenden Einschnitten (14) erstreckt und diese in Längsrichtung des Gitterelements (30) beabstandeten Einschnitte schneidet, daß die Flügel von benachbarten Abschnitten durch jeweils ein Rippenelement (18) getrennt sind, welches in dem Gitterelement geformt ist und wobei sich die Flügel jeweils über einen wesentlich größeren Längsabschnitt der Gitterelementlänge als die dazwischenliegenden Rippenelemente erstrecken, und daß die Gitterelemente (30) durch Eingriff von Verbindern (20) in die Rippenelemente (18) in im wesentlichen Vertikalebenen aufrecht befestigt sind.

2. Gitter nach Anspruch 1, dadurch gekennzeichnet, daß sich die Verbinder (20) im wesentlichen senkrecht zu den aufrechten Gitterelementen (30) erstrecken.

3. Gitter nach einem der Ansprüche 1 oder 2, dadurch gekennzeichnet, daß die Verbinder (20) abwechselnd an den oberen und unteren Rändern der Gitterelemente (30) befestigt sind.

4. Gitter nach Anspruch 1, 2 oder 3, dadurch gekennzeichnet, daß sich die Flügel (32, 34, 36, 38) in einer gekrümmten Weise erstrecken, wobei einer (34) der Flügel in einem Abschnitt nach unten gekrümmt und der andere Flügel (32) in dem gleichen Abschnitt nach oben gekrümmt ist, wobei die Flügel (32, 34, 36, 38) jedes Abschnitts in ihrer Vorsprungsrichtung entlang der Gitterelement-Längserstreckung abwechseln.

5. Gitter nach einem der Ansprüche 1 bis 4, dadurch gekennzeichnet, daß die Flügel gezahnte Ränder haben, um eine Anzahl von Tropfpunkten zu bilden.

6. Gitter nach einem der Ansprüche 1, 2, 3 oder 4, dadurch gekennzeichnet, daß die Flügel Perforationen aufweisen, um eine Anzahl von Tropfpunkten zu bilden.

7. Gitter nach Anspruch 5, dadurch gekennzeichnet, daß die Einschnitte (12) in Längsrichtung Zickzackschnitte sind und an Endabschnitte der in Querrichtung verlaufenden Einschnitte (14) anschließen.

8. Gitter nach einem Ansprüche 1 bis 7, dadurch gekennzeichnet, daß die Gitterelemente (30) eine Mehrzahl von Flügelpaaren tragen, von denen ein Paar über dem anderen angeordnet ist.

9. Gitter nach einem der Ansprüche 1 bis 8, dadurch gekennzeichnet, daß die senkrechte Höhe der Verbinder (20) wesentlich kleiner als die senkrechte Höhe der aufrechten Gitterelemente (30) ist.

10. Dampf-Flüssigkeits-Kontaktierungsvorrichtung mit einer Anzahl von Gittern nach einem der Ansprüche 1 bis 9, wobei die Gitter übereinander angeordnet sind und Verbinder (20) an den Oberkanten der Gitterelemente (30) einer Lage die Verbinder (20) der Unterkanten der Gitterelemente (30) der unmittelbar darüberliegenden Lage sind.

11. Verfahren zur Herstellung eines Dampf-Flüssigkeitsgitters zur Verwendung in einer Dampf-Flüssigkeits-Kontaktvorrichtung, aus dünnem, schmalem Streifenmaterial, wobei das Verfahren die Bildung einer Mehrzahl von in Längsrichtung verlaufenden Einschnitten (12) in einer Mehrzahl von Längen (30) des Streifenmaterials umfaßt, wobei stützende, ungeschnittene Rippenabschnitte (18) dazwischen belassen werden, und durch Biegen der Vorsprünge (32, 34) aus der Ebene jeder Länge zwischen den Einschnitten und Befestigen von dünnen, aufrechten Streifenelementen (20) in Haltebeziehung quer zu einer Mehrzahl von parallel beabstandeten Längen (30) des Streifenmaterials, dadurch gekennzeichnet, daß die in Längsrichtung verlaufenden Einschnitte (12) verhältnismäßig lang sind und die stützenden Rippenabschnitte (18) verhältnismäßig kurz sind, daß die in Querrichtung verlaufenden Einschnitte (14) an jedem Ende der in Längsrichtung verlaufenden Einschnitte (12) gemacht werden, um eine Mehrzahl von Schnittbereichen in dem Streifenmaterial zu bilden, daß die Längen (30) des Streifenmaterials entlang jeder Seite des Schnittbereichs im allgemeinen parallel zu dem in Längsrichtung verlaufenden Einschnitt und zu jedem Ende der in Querrichtung verlaufenden Einschnitte in jedem Schnittbereich an jeder Seite des Streifenmaterials nach außen gebogen werden, um ein Paar von nach außen gerichteten Flügelelementen (32, 34) zu bilden, die sich von jedem Schnittbereich nach entgegengesetzten Seiten des Streifenmaterials erstrecken.

12. Verfahren nach Anspruch 11, dadurch gekennzeichnet, daß eine Mehrzahl von "I"-formigen Einschnitten in dem Streifenmaterial (30) zur Bildung von "I"-formigen Schnittbereichen gemacht werden.

13. Verfahren nach Anspruch 11 oder 12, dadurch gekennzeichnet, daß die in Längsrichtung verlaufenden Einschnitte gezahnt sind.

14. Verfahren nach Anspruch 11, 12 oder 13, dadurch gekennzeichnet, daß die beabstandeten Paare von in Längsrichtung verlaufenden Einschnitten nebeneinander in dem Streifenmaterial in jedem Schnittbereich vorgesehen werden.

15. Verfahren nach einem der Ansprüche 11 bis 14, dadurch gekennzeichnet, daß die in Querrichtung verlaufenden Einschnitte (14) an jedem Ende der Schnittbereiche im wesentlichen senkrecht zu den in Längsrichtung verlaufenden Einschnitten (12) verlaufen.

16. Verfahren nach einem der Ansprüche 11 bis 15, dadurch gekennzeichnet, daß das Streifenmaterial gebogen wird, um sich nach außen erstreckende, gekrümmte Flügelelemente zu bilden.

17. Verfahren nach einem der Ansprüche 11 bis 16, dadurch gekennzeichnet, daß sich die in benachbarten Schnittbereichen erstreckenden Flügelelemente nach entgegengesetzten Seiten des Streifenmaterials erstrecken, wobei die Vorsprungsrichtung der Flügelelemente entlang der Länge des Streifenmaterials abwechselt.

18. Verfahren nach einem der Ansprüche 11 bis 17, dadurch gekennzeichnet, daß das Streifenmaterial in einem einzigen Arbeitsschritt geschnitten und gebogen wird, wozu eine Gesenkpresse verwendet wird, um die Flügelelemente mit den gekrümmten, nach außen vorstehenden Flächen zu formen.

## Revendications

1. Grille de contact entre une vapeur et un liquide, comprenant une pluralité d'éléments de grille (30) espacés les uns des autres, sensiblement parallèles entre eux et fixés à une pluralité de connecteurs constitués par des éléments (20) en forme de minces réglettes verticales, positionnés d'une façon générale verticalement, à distance les uns des autres et parallèlement entre eux, et croisés par rapport aux éléments de grille, chacun des éléments de grille étant plat et muni de saillies constituées par des pattes (32, 34, 36, 38) venues de matière avec l'élément de grille et faisant saillie vers l'extérieur à partir du plan de celui-ci, caractérisée en ce que les pattes ont la forme d'ailettes (32, 34, 36, 38) allongées longitudinalement sur l'élément de grille (30) et disposées par paires selon des sections de façon que les ailettes (32, 34 et 36, 38) de chaque paire soient positionnées l'une au-dessus de l'autre le long de la dimension longitudinale de l'élément de grille, les ailettes de chaque partie s'étendant de part et d'autre de l'élément de grille, les ailettes de chaque élément de grille (30) ayant été réalisées par formation de pattes (22) définies par une découpe longitudinale (12) dans l'élément de grille (30), qui fait intersection avec et s'étend entre deux découpes transversales (14) espacées longitudinalement sur l'élément de grille (30), les ailettes de sections adjacentes étant séparées par un élément de nervure correspondant (18) formé dans l'élément de grille, les ailettes s'étendant chacune sur une proportion de la longueur de l'élément de grille nettement plus grande que les éléments de nervure entre eux, les éléments de grille (30) étant fixés verticalement dans des plans sensiblement verticaux, par engagement des connecteurs (20) avec les éléments de nervure (18).

2. Grille selon la revendication 1, caractérisée en ce que les connecteurs (20) s'étendent sensiblement perpendiculairement aux éléments de grille verticaux (30).

3. Grille selon la revendication 1 ou 2, caractérisée en ce que les connecteurs (20) sont fixés en alternance sur les bords supérieur et inférieur de l'élément de grille (30).

4. Grille selon la revendication 1, 2 ou 3, caractérisée en ce que les ailettes (32, 34, 36, 38) s'étendent d'une façon incurvée, l'une (34) des ailettes étant incurvée vers le bas dans une section, tandis que l'autre (32) des ailettes est incurvée vers le haut dans le même section, les ailettes (32, 34 et 36, 38) de chaque section alternant par leur direction de saillie le long de la dimension longitudinale des éléments de grille.

5. Grille selon l'une quelconque des revendications précédentes, caractérisée en ce que les ailettes ont des bords dentelés de façon à former une pluralité de points de dégouttement.

6. Grille selon la revendication 1, 2, 3 ou 4, caractérisée en ce que les ailettes ont des perforations de façon à former une pluralité de points de dégouttement.

7. Grille selon la revendication 5, caractérisée en ce que les découpes longitudinales (12) sont en zigzag et relient les parties d'extrémité des découpes transversales (14).

8. Grille selon l'une quelconque des revendications précédentes, caractérisée en ce que les éléments de grille (30) portent une pluralité de paires d'ailettes qui sont positionnées une paire au-dessus de l'autre.

9. Grille selon l'une quelconque des revendications précédentes, caractérisée en ce que la hauteur verticale des connecteurs (20) est sensiblement inférieure à la hauteur verticale des éléments de grille verticaux (30).

10. Appareil de mise en contact d'une vapeur et d'un liquide, comprenant une pluralité de grilles selon l'une quelconque des revendications précédentes, les grilles étant disposées l'une au-dessus de l'autre de façon que les connecteurs (20) aux bords supérieurs des éléments de grille (30) d'une première couche d'éléments comprennent les connecteurs (20) aux bords inférieur des éléments de grille (30) de la couche d'élément immédiatement au-dessus de la première couche.

11. Procédé de fabrication d'une grille de contact entre une vapeur et un liquide, destinée à être utilisée dans un appareil de mise en contact entre une vapeur et un liquide, à partir d'un mince feuillard étroit, ledit procédé consistant à réaliser une pluralité de découpes longitudinales (12) dans une pluralité de longueurs (30) dudit feuillard, des sections de support formant des nervures non découpées (18) étant laissées entre lesdites découpes, et à plier les pattes de découpe (32, 34) hors du plan de chaque longueur comprise entre les découpes, puis à fixer les éléments minces verticaux (20) en relation de support transversalement par rapport à une pluralité de longueurs (30) de feuillard espacées parallèlement, caractérisé en ce que les découpes longitudinales (12) sont relativement longues tandis que les sections de support (18) en forme de nervures sont relativement courtes, des découpes transversales (14) sont effectuées à chaque extrémité des découpes longitudinales (12), de façon à former une pluralité de sections de découpe dans le feuillard, les longueures (30) de feuillard, le long de chaque côté de la section de découpe, généralement parallèle à la découpe longitudinale, et à chaque extrémité des découpes transversales de chaque section de découpe, étant pliées vers l'extérieur de chaque côté du feuillard de façon à former une paire d'éléments (32, 34) en forme d'ailettes tournés vers l'extérieur et s'étendant depuis chaque section de découpe de part et d'autre du feuillard.

12. Procédé selon la revendication 11, caractérisé en ce que l'on ménage une pluralité de découpes en forme de "I" dans le feuillard (30) pour former des sections de découpe en forme de "I".

13. Procédé selon la revendication 11 ou 12, caractérisé en ce que les découpes longitudinales sont dentelées.

14. Procédé selon la revendication 11, 12 ou 13, caractérisé en ce que des paires espacées de découpes longitudinales sont aménagées côte à côte dans le feuillard dans chaque section de découpe.

15. Procédé selon l'une quelconque des revendications 11 à 14, caractérisé en ce que les découpes transversales (14) à chaque extrémité des sections de découpe sont sensiblement perpendiculaires aux découpes longitudinales (12).

16. Procédé selon l'une quelconque des revendications 11 à 15, caractérisé en ce que le feuillard est plié pour former des éléments en ailettes incurvés s'étendant vers l'extérieur.

17. Procédé selon l'une quelconque des revendications 11 à 16, caractérisé en ce que les éléments en ailettes s'étendant vers l'extérieur dans des sections de découpe adjacentes s'étendent de part et d'autre du feuillard, la direction de saillie des éléments en ailettes alternant le long du feuillard.

18. Procédé selon l'une quelconque des revendications 11 à 17, caractérisé en ce que le feuillard est découpé et plié dans une opération en un seul stade, en utilisant une presse à matrice pour former les éléments en ailettes à surfaces incurvées s'étendant vers l'extérieur.

FIG. Ia

FIG. Ib

FIG. Ic

FIG. 2

FIG. 3

FIG. 4